# FASCICULE DE BREVET EUROPEEN

(11) **EP 4 287 817 B1**
(45) Date de publication et mention de la délivrance du brevet: **08.04.2026**
(21) Numéro de dépôt: 22703622.5
(22) Date de dépôt: 03.02.2022
(51) Int. Cl.: A01B 69/00

(54) **PROCÉDÉ DE SEMIS CONTRÔLÉ D'UNE PARCELLE AGRICOLE ET SYSTEME POUR SA MISE EN OEUVRE**
VERFAHREN ZUR KONTROLLIERTEN AUSSAAT EINER LANDWIRTSCHAFTLICHEN PARZELLE UND SYSTEM ZUR DURCHFÜHRUNG DES VERFAHRENS
METHOD OF CONTROLLED SOWING OF AN AGRICULTURAL PLOT AND SYSTEM FOR ITS IMPLEMENTATION

(30) Priorité: 05.02.2021 FR 2101118
(43) Date de publication de la demande: 13.12.2023
(73) Titulaire: Kuhn SAS, 67700 Saverne (FR)
(72) Inventeur: JARRASSIER, Benoit, 67700 OTTERSTHAL (FR); POTIER, Philippe, 67290 ZITTERSHEIM (FR)
(74) Mandataire: Hager, Esther Evelyne
(86) Numéro de dépôt international: PCT/EP2022/052545
(87) Numéro de publication internationale: WO 2022/167508

(56) Documents cités:
- EP-B1- 2 267 566
- EP-B1- 2 342 963
- WO-A1-2017/110116
- US-A- 5 050 771
- US-A- 6 128 574

## Description

[La présente invention concerne le domaine du machinisme et des procédés agricoles, plus particulièrement le semis, et a pour objets un procédé et un système de semis contrôlé avec jalonnage d'une parcelle agricole.

Lors des étapes de semis et traitement(s) (par exemple pulvérisation, binage, fertilisation) d'une parcelle agricole, le tracteur et les outils qu'il porte empruntent souvent les mêmes trajectoires (voies ou traces de circulation). Celles-ci se retrouvent donc inexploitables car écrasées à chaque opération.

D'ordinaire, les segments droits à l'intérieur de la parcelle ainsi que les segments droits dans la fourrière (portion périphérique entourant, le cas échéant, au moins partiellement la zone intérieure majoritaire de la parcelle) sont jalonnés. Le jalonnage consiste à couper les éléments semeurs du semoir correspondant aux traces de passage des roues du tracteur/outil afin de ne pas gaspiller de graines.

Pour optimiser le nombre de trajectoires (et donc limiter l'écrasement), l'agriculteur choisit souvent des outils/machines dont les largeurs sont des multiples des largeurs de travail des autres outils/machines utilisés précédemment ou ultérieurement, notamment de la largeur de travail du semoir, porté ou tracté. Ceci restreint donc son choix quant aux machines qu'il doit acquérir et/ou utiliser s'il souhaite réduire les pertes dues à l'écrasement. Par exemple, le choix de la machine servant à l'étape de pulvérisation, en particulier sa largeur de travail, est directement impacté par la largeur de travail et la dimension des traces de passages du semoir utilisé préalablement et par conséquent du type de jalonnage qui a été appliqué lors du semis.

De nombreux procédés et systèmes de jalonnage de segments de trajets droits, formant les portions courantes des arrangements de lignes de semis, sont déjà connus. Des exemples de tels procédés et systèmes sont divulgués par les documents suivants : WO 2015/028127, EP 2 532 218, EP 0 702 888 et EP 0 176 023, ou encore mise en œuvre par la déposante avec la technologie dénommée « Section Control ».

Toutefois, le jalonnage en relation avec des trajectoires non rectilignes n'est, à ce jour, pas encore maîtrisé, notamment du fait de la non-reproductibilité à l'identique des trajectoires en fonction du matériel utilisé et des conditions de mise en œuvre variables.

De ce fait, les virages, demi-tours et autres manœuvres (en particulier à trajectoires non rectilignes) ne sont traditionnellement pas jalonnés, car leurs formes et dimensions ne sont pas forcément toujours exactement les mêmes selon le type d'outil de traitement (trainé/porté), la largeur de travail, la manœuvrabilité (présence d'essieux suiveurs ou directeurs sur l'outil ou pas), l'inclinaison du terrain, la qualité du sol, les conditions météorologiques du jour de l'intervention, etc.

De plus, un jalonnage précis de ces portions de trajets est très difficile à réaliser pour un chauffeur, même lorsqu'il est assisté, de même que le suivi de ce jalonnage lors des opérations agricoles réalisées ultérieurement. EP2342963 B1, par exemple ne considère pas les opérations postérieures de véhicules ou attelages dans le jalonnage pour réaliser une ligne de semis.

Ainsi, les systèmes d'assistances au conducteur (vulgairement appelés « autopilotage ») des tracteurs permettent facilement de travailler l'intérieur de la parcelle de façon assistée (gestion de la vitesse et de la direction du tracteur sur les segments droits ou faiblement courbés) et donc de jalonner cette portion assez facilement. Néanmoins, bien que certains autopilotages effectuent eux-mêmes les demi-tours entre les segments droits, le tracé exact de ces demi-tours n'est pas connu à l'avance (car adapté individuellement avant chaque demi-tour par le logiciel d'assistance au conducteur). Il en va de même pour certaines manœuvres comme les ravitaillements, qui sont encore moins automatisées car les systèmes d'autopilotage existants ne les prennent pas en compte. Et une programmation de ces logiciels d'autopilotage pour y inclure les manœuvres particulières précitées serait fastidieuse et nécessiterait une formation poussée pour l'utilisateur.

Enfin, la mise en œuvre d'engins de semis et/ou de traitement robotisés, dont les largeurs de travail sont souvent réduites, entraîne une multiplication du nombre de manœuvres, et aboutit à un écrasement des cultures et un tassement du sol sur de grandes surfaces, notamment aux extrémités opposées des portions droites des lignes de semis, et donc résulte en un gaspillage de graines.

Le but principal de la présente invention est de proposer un procédé et un système de semis permettant de réduire le gaspillage de graines, en particulier en-dehors des portions droites des arrangements de lignes de semis d'une parcelle, en limitant le dépôt de semis non productif, c'est-à-dire le dépôt de graines n'aboutissant pas à la production d'une plante pouvant être récoltée.

A cet effet, l'invention a pour objet un procédé de semis contrôlé d'une parcelle agricole par l'intermédiaire d'un véhicule de semis ou d'un attelage avec machine de semis, présentant une pluralité d'organes de semis individuels aptes et destinés chacun à réaliser une ligne de semis, ce véhicule ou attelage étant configuré pour pouvoir sélectivement, et au moins temporairement, interrompre une, plusieurs ou toutes les ligne(s) de semis, par blocage et/ou escamotage du ou des organe(s) concerné(s), de manière à réaliser un jalonnage de ladite parcelle évitant l'écrasement des cultures lors du ou des passage(s) prévu(s) d'un ou de plusieurs véhicule(s) ou attelage(s) connu(s) destinés à réaliser un ou des opération(s) postérieure(s) sur cette parcelle,

ledit procédé consistant à fournir préalablement un plan virtuel de la parcelle avec les portions courantes, généralement rectilignes, des arrangements de lignes de semis à réaliser, au moins dans une région intérieure majoritaire de ladite parcelle et éventuellement dans une région périphérique de fourrière bordant ou entourant, le cas échéant au moins partiellement, cette région intérieure, à en déduire les trajectoires du véhicule ou de l'attelage de semis et à commander ce dernier pour effectuer un semis contrôlé avec jalonnage pour ces portions courantes, en fonction des trajectoires des organes de roulement du ou des véhicule(s) ou attelage(s) réalisant la ou les opération(s) postérieure(s) sur ces portions courantes,

procédé caractérisé en ce qu'il consiste également à fournir et à prendre en compte les trajectoires particulières du ou des véhicule(s) ou attelage(s) réalisant la ou les opération(s) postérieure(s) précitée(s) au moins durant les déplacements dans des virages, lors de demi-tours ou entre les portions courantes, et à commander le véhicule ou l'attelage de semis pour réaliser un semis contrôlé avec jalonnage aussi durant ces trajectoires particulières.

L'invention sera mieux comprise, grâce à la description ci-après, qui se rapporte à des modes de réalisation préférés, donnés à titre d'exemples non limitatifs, et expliqués avec référence aux dessins schématiques annexés, dans lesquels :
[Fig. 1] illustre de manière schématique, par la représentation des traces de circulation, un exemple de jalonnage traditionnel d'une parcelle (jalonnage limité tel que réalisé jusqu'à présent par les agriculteurs), sur cette figure les portions de trajectoire jalonnées sont représentées en traits pointillés et les portions non-jalonnées, et donc semées puis écrasées, sont représentées en traits continus, le cadre extérieur représentant le contour de la parcelle ;
[Fig. 2] représente un second exemple de parcelle similaire à celle de la figure 1 traitée avec un jalonnage traditionnel, cette parcelle étant travaillée d'une façon alternative par rapport à l'exemple de la figure 1 (le motif des traces de passages est différent mais le principe reste le même) ;
[Fig. 3] représente un jalonnage total de la parcelle de la figure 1 en accord avec l'invention, le motif des traces des trajectoires étant identique à celui de ladite figure 1 ;
[Fig. 4] représente un jalonnage total de la parcelle de la figure 2 en accord avec l'invention, le motif des traces des trajectoires étant identique à celui de ladite figure 2, et,
[Fig. 5] et

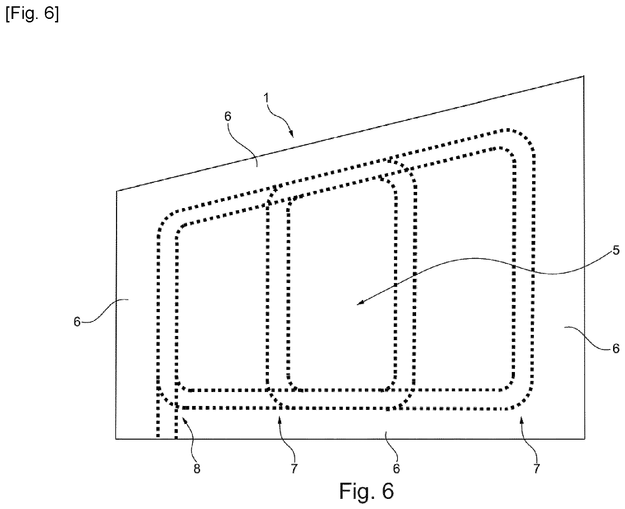

[Fig. 6.] illustrent des exemples de jalonnage total pour une parcelle dans laquelle un obstacle est présent (Fig. 5) et une parcelle dont le contour n'est pas rectangulaire (Fig. 6).

L'invention concerne un procédé de semis contrôlé d'une parcelle agricole (1) par l'intermédiaire d'un véhicule de semis (2) ou d'un attelage avec machine de semis, présentant une pluralité d'organes de semis individuels (3) aptes et destinés chacun à réaliser une ligne de semis (4), ce véhicule ou attelage (2) étant configuré pour pouvoir sélectivement, et au moins temporairement, interrompre une, plusieurs ou toutes les ligne(s) de semis (4), par blocage et/ou escamotage du ou des organe(s) (3) concerné(s), de manière à réaliser un jalonnage de ladite parcelle (1) évitant l'écrasement des cultures lors du ou des passage(s) prévu(s) d'un ou de plusieurs véhicule(s) ou attelage(s) connu(s) destinés à réaliser un ou des opération(s) postérieure(s) sur cette parcelle (1).

Ce procédé consiste essentiellement à fournir préalablement un plan virtuel de la parcelle avec les portions courantes (4'), généralement rectilignes, des arrangements de lignes de semis à réaliser, au moins dans une région intérieure majoritaire (5) de ladite parcelle (1) et éventuellement dans une région périphérique de fourrière (6) bordant ou entourant, le cas échéant au moins partiellement, cette région intérieure (5), à en déduire les trajectoires du véhicule ou de l'attelage de semis (2) et à commander ce dernier pour effectuer un semis contrôlé avec jalonnage pour ces portions courantes (4'), en fonction des trajectoires des organes de roulement du ou des véhicule(s) ou attelage(s) réalisant la ou les opération(s) postérieure(s) sur ces portions courantes.

Conformément à l'invention, ledit procédé consiste également à fournir et à prendre en compte les trajectoires particulières (7, 8) du ou des véhicule(s) ou attelage(s) réalisant la ou les opération(s) postérieure(s) précitée(s) au moins durant les déplacements dans des virages, lors de demi-tours ou entre les portions courantes, et à commander le véhicule ou l'attelage de semis (2) pour réaliser un semis contrôlé avec jalonnage aussi durant ces trajectoires particulières (7, 8).

En réalisant un jalonnage dit « total » de la parcelle considérée, avec prise en compte lors de l'opération de semis des trajectoires, et donc des traces de roulement futures (en traits pointillés sur les différentes figures - bandes non semées lors du semis), du ou des véhicule(s) ou attelage(s) réalisant la ou les opération(s) postérieure(s), au moins pour les manœuvres courantes précitées, le procédé selon l'invention permet d'atteindre le but fixé, à savoir, réduire le gaspillage de graines de semence, en particulier en-dehors des portions droites des arrangements de lignes de semis d'une parcelle, en limitant le dépôt de graines non productif.

Ainsi, concrètement, la distribution de semence n'est pas seulement absente des paires de bandes de sol généralement parallèles et rectilignes situées dans la région intérieure de la parcelle (et correspondant aux rangées) et utilisées ultérieurement par les moyens de roulement des machines ou attelages agricoles réalisant des opérations postérieures au semis, mais également des paires de bandes de sol généralement parallèles, rectilignes ou non, situées en dehors de la région intérieure de la parcelle (et correspondant notamment aux chemins de jonction, de manœuvre, de fourrières ou de tournières) et utilisées ultérieurement par les moyens de roulement de ces mêmes machines ou attelages agricoles.

Lorsque la parcelle considérée ne comporte pas de zones périphériques attribuées aux manœuvres, celles-ci se font à l'intérieur de la parcelle, réduisant ainsi d'autant la région intérieure avec les rangées parallèles et rectilignes.

Parmi les opérations postérieures qu'il est normalement possible de connaître lors du semis, en relation avec le matériel utilisé, on peut notamment citer les actions post-semis et pré-récolte telles que le binage, la pulvérisation, l'épandage, la fertilisation et l'irrigation.

En plus des gains en relation avec les manœuvres précitées, des gains additionnels peuvent être recherchés en prévoyant avantageusement que le procédé selon l'invention consiste, en outre, à déterminer et à prendre en compte les trajectoires particulières (8) du ou des véhicule(s) ou attelage(s) réalisant la ou les opération(s) postérieure(s) précité(s) durant des manœuvres associées à des évitements d'objets ou d'obstacles (9), à des entrées ou des sorties de parcelle, à des opérations de chargement ou de ravitaillement en intrants ou à des opérations spécifiques prévisibles, fonction par exemple de la nature des plantes cultivées sur la parcelle considérée, des caractéristiques du sol de cette dernière et/ou du type de véhicule(s) ou d'attelage(s) concerné.

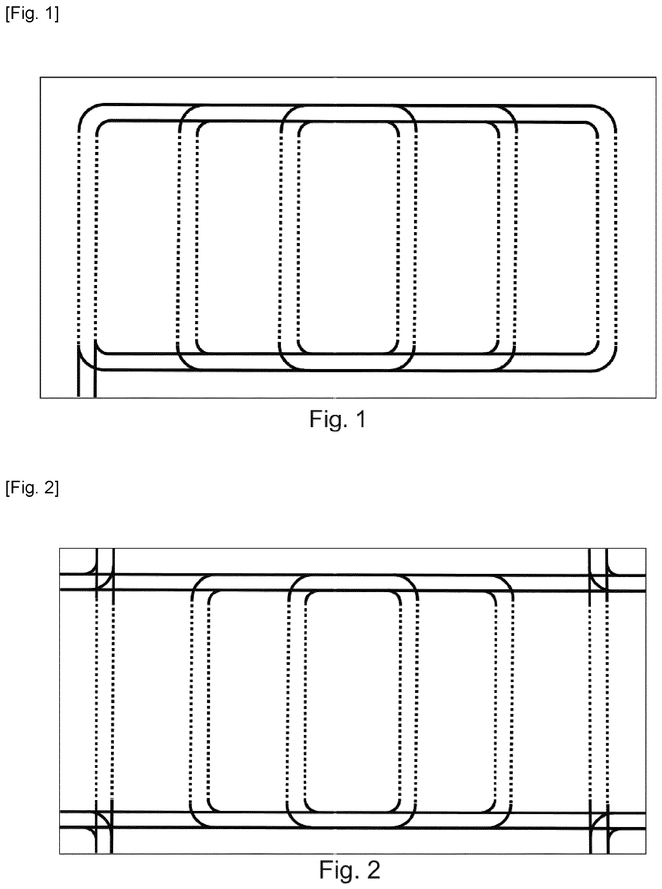

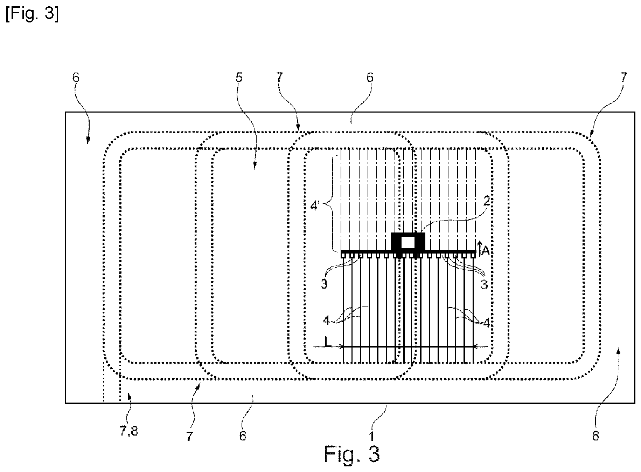

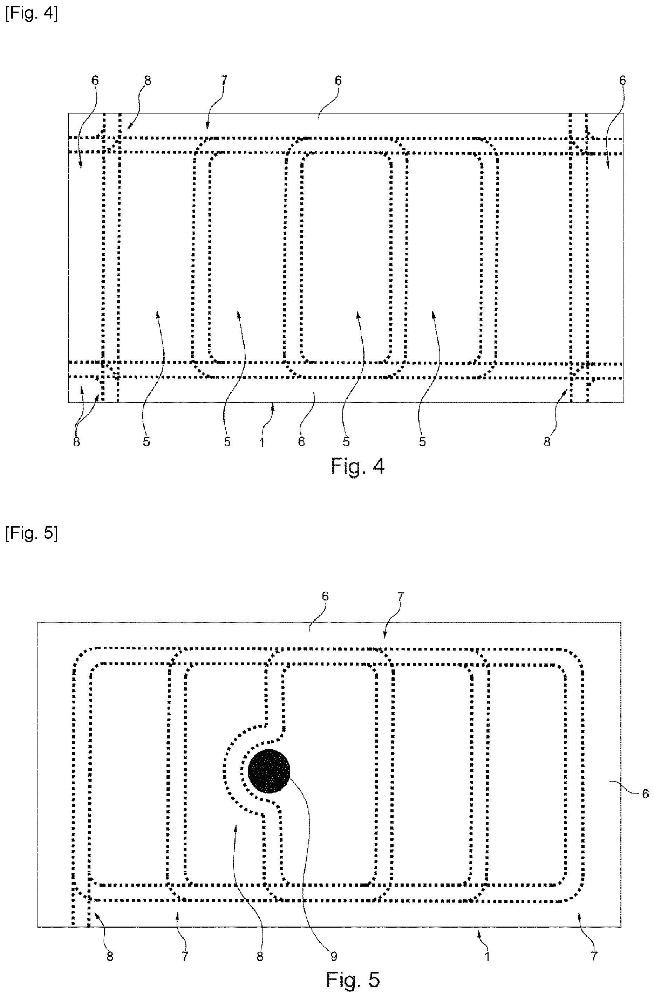

Une comparaison de chacune des figures 3 et 4 avec respectivement chacune des figures 1 et 2, permet d'évaluer visuellement le gain en surface jalonnée et donc, proportionnellement, l'économie en graines de semence non mises en terre au niveau de surfaces de la parcelle subissant un écrasement postérieur, ce en fonction des manœuvres prises en compte.

En accord avec une caractéristique additionnelle favorable, le procédé peut consister à fournir préalablement, pour les manœuvres prévisibles, des modélisations des trajectoires des moyens de roulement des différents véhicules ou attelages réalisant la ou les opérations postérieures susceptibles d'être mise(s) en œuvre sur la parcelle (1) considérée, avec prise en compte d'un éventuel facteur d'erreur ou de dérive déterminé par des mesures lors de mises en œuvre en conditions réelles.

Ce facteur peut permettre de corriger des erreurs dans le jalonnage dues à la nature du terrain, telle que par exemple un dévers dans la parcelle. Ces erreurs peuvent aussi provenir d'éléments mécaniques présents sur le véhicule ou l'attelage réalisant une opération postérieure, ou sur un outil qui lui étant associé.

Ces éléments mécaniques peuvent, par exemple, correspondre à des essieux dits « suiveurs » ou « dirigés » qui améliorent le rayon de braquage de l'attelage (intégrant la machine agricole qui les comporte) et facilitent les manœuvres. Toutefois, ils ne sont pas parfaits et ne permettent généralement pas à l'outil ou à la machine attelé(e) de suivre à 100% les mêmes traces que l'engin tracteur. Un tel « essieu suiveur », dont la technologie de guidage automatique dénommé « Track Assist » utilise des gyroscopes et prend en compte des données GPS, est notamment mis en œuvre par la société Kuhn-Blanchard sur ses pulvérisateurs tractés dénommés « Metris 2 » et « Oceanis 2 » (marques déposées).

Ce facteur d'erreur peut également permettre de corriger l'erreur humaine présente naturellement dans les manœuvres réalisées par un chauffeur.

En accord avec un mode de réalisation avantageux de l'invention, le plan virtuel de la parcelle (1) comprend également un découpage de sa surface en zones de travail en relation avec des préconisations de semis, telles que la modulation de la dose de semis et/ou de fertilisant à déposer, la vitesse de travail, la profondeur de travail, le réglage spécifique d'au moins un paramètre opératoire du véhicule ou attelage de semis (2) ou analogue.

Ces préconisations variées peuvent notamment être visualisées et traitées par le biais d'une application, telle que par exemple celle connue sous la désignation « EasyMaps » par la demanderesse.

Préférentiellement, le semis contrôlé de la parcelle (1) est réalisé par un véhicule (2) robotisé, à fonctionnement autonome ou commandé à distance, dont la largeur de travail (L) est avantageusement un sous-multiple entier des largeurs de travail des différents véhicules ou attelages réalisant la ou les opérations postérieures susceptibles d'être mise(s) en œuvre sur la parcelle (1) considérée, ces derniers étant avantageusement également du type machine robotisée, à fonctionnement autonome ou commandé à distance.

Un exemple de mise en œuvre d'un tel traitement automatisé d'une parcelle par des robots est notamment décrite dans les demandes de brevets français n° FR 2 009 696 et n° FR 2 009 705.

Le ou les véhicule(s) ou attelage(s) réalisant la ou les opération(s) postérieure(s) peuvent être de différents types, tels que par exemple : tracteur conventionnel avec chauffeur, robot autonome sans chauffeur, véhicule automoteur, véhicule tout-terrain à quatre roues ou analogue, associé le cas échéant à au moins une machine ou au moins un outil agricole porté (e), semi-porté(e) ou trainé(e).

De même, les moyens de roulement de ces véhicules ou attelages peuvent être de différentes natures : roues, chenilles, moyens mixtes ou autres, ayant chacun ses caractéristiques et propriété spécifiques.

Toutes les spécificités évoquées ci-dessus en relations avec le ou les véhicule(s) ou attelage(s) réalisant la ou les opération(s) postérieure(s), et connues antérieurement, sont avantageusement prises en compte lors de la détermination préalable de la stratégie de jalonnage total appliquée par le véhicule de semis (2).

En accord avec une mise en œuvre pratique de l'invention en relation avec des engins autonomes (type robots agricoles), il est avantageusement prévu que la génération des instructions à respecter pour le jalonnage total s'effectue au moment de la génération de la « mission » de travail de l'engin autonome considéré, c'est-à-dire au moment où les parcours que les engins successifs utilisés vont emprunter, sont définis.

Cette génération de parcours est par exemple effectuée par un logiciel dédié que l'agriculteur utilise en rentrant et/ou fournissant les différentes caractéristiques de la tâche à effectuer (informations sur la parcelle, les éventuels obstacles, la/les machines à utiliser pour le semis et les opérations ultérieures, la vitesse de travail, etc.). Ce parcours est ensuite envoyé (entièrement ou partiellement au fur et à mesure de l'avancée) sous formes d'instructions aux différents engins autonomes au moment de démarrer la mission. Un système superviseur (une unité de contrôle et de gestion de la flotte d'engins autonomes) est présent pour faire la communication entre le parcours généré en amont et les robots agricoles mis en oeuvre au moment de l'accomplissement de la mission. Une fois les instructions reçues par le/les engins autonomes, un logiciel embarqué sur l'engin considéré s'occupe de commander le semoir (en utilisant par exemple la technologie dénommée « Section Control » déjà évoquée) afin de semer la parcelle en respectant le jalonnage total prévu.

De même pour les opérations suivantes, les instructions envoyées aux engins prendront en compte les traces du jalonnage total pour que celui-ci soit respecté.

L'invention concerne également un système pour la mise en œuvre du procédé de semis contrôlé tel que décrit ci-dessus.

Ce système comprend un véhicule de semis ou un attelage avec machine de semis (2), autonome ou semi-autonome, présentant une pluralité d'organes de semis individuels (3), aptes et destinés chacun à réaliser une ligne de semis (4), ce véhicule ou attelage (2) étant configuré pour pouvoir sélectivement, et au moins temporairement, interrompre une, plusieurs ou toutes les ligne(s) de semis (4), par blocage et éventuellement escamotage du ou des organe(s) concerné(s).

Ce système est caractérisé en ce que le véhicule ou l'attelage (2) est équipé de moyens de commande comprenant un moyen informatique configuré pour exploiter un plan virtuel de la parcelle (1) à semer et pour établir et exécuter un protocole de déplacement et de fonctionnement dudit véhicule ou attelage (2) configuré pour effectuer un semis contrôlé avec jalonnage sélectif sur la totalité de la parcelle (1) considérée, en fonction des trajectoires des organes de roulement du ou des véhicule(s) ou attelage(s) réalisant la ou les opération(s) postérieure(s) au semis de cette parcelle.

Préférentiellement, le véhicule ou l'attelage de semis (2) est du type véhicule robotisé, à fonctionnement autonome, semi-autonome ou commandé à distance.

## Revendications

1. Procédé de semis contrôlé d'une parcelle agricole (1) par l'intermédiaire d'un véhicule de semis (2) ou d'un attelage avec machine de semis, présentant une pluralité d'organes de semis individuels (3) aptes et destinés chacun à réaliser une ligne de semis (4) , ce véhicule ou attelage (2) étant configuré pour pouvoir sélectivement, et au moins temporairement, interrompre une, plusieurs ou toutes les ligne(s) de semis (4), par blocage et/ou escamotage du ou des organe(s) (3) concerné(s), de manière à réaliser un jalonnage de ladite parcelle (1) évitant l'écrasement des cultures lors du ou des passage(s) prévu(s) d'un ou de plusieurs véhicule(s) ou attelage(s) connu(s) destinés à réaliser un ou des opération(s) postérieure(s) sur cette parcelle (1), ledit procédé consistant à fournir préalablement un plan virtuel de la parcelle avec les portions courantes (4'), généralement rectilignes, des arrangements de lignes de semis à réaliser, au moins dans une région intérieure majoritaire (5) de ladite parcelle (1) et éventuellement dans une région périphérique de fourrière (6) bordant ou entourant, le cas échéant au moins partiellement, cette région intérieure (5), à en déduire les trajectoires du véhicule ou de l'attelage de semis (2) et à commander ce dernier pour effectuer un semis contrôlé avec jalonnage pour ces portions courantes (4'), en fonction des trajectoires des organes de roulement du ou des véhicule(s) ou attelage(s) réalisant la ou les opération(s) postérieure(s) sur ces portions courantes,
procédé **caractérisé en ce qu'**il consiste également à fournir et à prendre en compte les trajectoires particulières (7, 8) du ou des véhicule(s) ou attelage(s) réalisant la ou les opération(s) postérieure(s) précitée(s) au moins durant les déplacements dans des virages, lors de demi-tours ou entre les portions courantes, et à commander le véhicule ou l'attelage de semis (2) pour réaliser un semis contrôlé avec jalonnage aussi durant ces trajectoires particulières (7, 8).

2. Procédé selon la revendication 1, **caractérisé en ce qu'**il consiste en outre à déterminer et à prendre en compte les trajectoires particulières (8) du ou des véhicule(s) ou attelage(s) réalisant la ou les opération(s) postérieure(s) précité(s) durant des manœuvres associées à des évitements d'objets ou d'obstacles, à des entrées ou des sorties de parcelle, à des opérations de chargement ou de ravitaillement en intrants ou à des opérations spécifiques prévisibles, fonction par exemple de la nature des plantes cultivées sur la parcelle considérée, des caractéristiques du sol de cette dernière et/ou du type de véhicule(s) ou d'attelage(s) concerné.

3. Procédé selon la revendication 1 ou 2, **caractérisé en ce qu'**il consiste à fournir préalablement, pour les manœuvres prévisibles, des modélisations des trajectoires des moyens de roulement des différents véhicules ou attelages réalisant la ou les opérations postérieures susceptibles d'être mise(s) en œuvre sur la parcelle considérée, avec prise en compte d'un éventuel facteur d'erreur ou de dérive déterminé par des mesures lors de mises en œuvre en conditions réelles.

4. Procédé selon l'une quelconque des revendications 1 à 3, **caractérisé en ce que** le plan virtuel de la parcelle (1) comprend également un découpage de sa surface en zones de travail en relation avec des préconisations de semis, telles que la modulation de la dose de semis et/ou de fertilisant à déposer, la vitesse de travail, profondeur de travail, le réglage spécifique d'au moins un paramètre opératoire du véhicule ou attelage de semis (2) ou analogue.

5. Procédé selon l'une quelconque des revendications 1 à 4, **caractérisé en ce que** le semis contrôlé de la parcelle (1) est réalisé par un véhicule (2) robotisé, à fonctionnement autonome ou commandé à distance, dont la largeur de travail (L) est avantageusement un sous-multiple entier des largeurs de travail des différents véhicules ou attelages réalisant la ou les opérations postérieures susceptibles d'être mise(s) en œuvre sur la parcelle (1) considérée, ces derniers étant avantageusement également du type machine robotisée, à fonctionnement autonome ou commandé à distance.

6. Système pour la mise en œuvre du procédé de semis contrôlé selon l'une quelconque des revendications 1 à 5, comprenant un véhicule de semis ou un attelage avec machine de semis (2), autonome ou semi-autonome, présentant une pluralité d'organes de semis individuels (3), aptes et destinés chacun à réaliser une ligne de semis (4), ce véhicule ou attelage (2) étant configuré pour pouvoir sélectivement, et au moins temporairement, interrompre une, plusieurs ou toutes les ligne(s) de semis (4), par blocage et éventuellement escamotage du ou des organe(s) concerné(s), système **caractérisé en ce que** le véhicule ou l'attelage (2) est équipé de moyens de commande comprenant un moyen informatique configuré pour exploiter un plan virtuel de la parcelle (1) à semer et pour établir et exécuter un protocole de déplacement et de fonctionnement dudit véhicule ou attelage (2) configuré pour effectuer un semis contrôlé avec jalonnage sélectif sur la totalité de la parcelle (1) considérée, en fonction des trajectoires des organes de roulement du ou des véhicule(s) ou attelage(s) réalisant la ou les opération(s) postérieure(s) au semis de cette parcelle.

7. Système selon la revendication 6, **caractérisé en ce que** le véhicule ou l'attelage de semis (2) est du type véhicule robotisé, à fonctionnement autonome, semi-autonome ou commandé à distance.

## Patentansprüche

1. Verfahren zur kontrollierten Aussaat einer landwirtschaftlichen Parzelle (1) mittels eines Säfahrzeugs (2) oder eines Gespanns mit einer Sämaschine, das eine Vielzahl einzelner Säorgane (3) aufweist, die jeweils zur Herstellung einer Säreihe (4) geeignet und bestimmt sind, wobei dieses Fahrzeug oder Gespann (2) so konfiguriert ist, dass es selektiv und zumindest vorübergehend eine, mehrere oder alle Säreihen (4) durch Blockieren und/oder Einziehen des oder der betreffenden Organe (3) unterbrechen kann, um eine Markierung der genannten Parzelle (1) zu erzielen, die ein Verdichten der Kulturen während der geplanten Durchfahrt(en) eines oder mehrerer bekannter Fahrzeuge oder Gespanne verhindert, die dazu bestimmt sind, einen oder mehrere nachfolgende Arbeitsgänge auf dieser Parzelle (1) durchzuführen, wobei das Verfahren darin besteht, vorab einen virtuellen Plan der Parzelle mit den regulären, im Allgemeinen geradlinigen Abschnitten (4') der anzubringenden Säreihen anzufertigen, zumindest in einem überwiegenden inneren Bereich (5) der Parzelle (1) und gegebenenfalls in einem Randbereich (6), der an den inneren Bereich (5) angrenzt oder ihn gegebenenfalls zumindest teilweise umgibt, daraus die Fahrbahnen des Säfahrzeugs oder Sägespanns (2) abzuleiten und dieses zu steuern, um eine kontrollierte Aussaat mit Markierung für diese regulären Abschnitte, (4') durchzuführen, entsprechend die Fahrbahnen der Laufwerke des oder der Fahrzeuge oder Gespanne, die den oder die nachfolgenden Vorgänge auf diesen regulären Abschnitten durchführen,
Verfahren, **dadurch gekennzeichnet, dass** es auch darin besteht, die besonderen Fahrbahnen (7, 8) des oder der Fahrzeuge oder Gespanne, die den oder die oben genannten nachfolgenden Vorgang(e) durchführen, zumindest während der Bewegungen in Kurven, bei Wendemanövern oder zwischen den regulären Abschnitten, und darin, das Säfahrzeug oder Sägespann (2) so zu steuern, dass auch während dieser besonderen Fahrbahnen (7, 8) eine kontrollierte Aussaat mit Markierung durchgeführt wird.

2. Verfahren nach Anspruch 1, **dadurch gekennzeichnet, dass** es darüber hinaus darin besteht, die besonderen Fahrbahnen (8) des oder der Fahrzeuge oder Gespanne zu bestimmen und zu berücksichtigen, die den oder die oben genannten nachfolgenden Vorgänge während Manövern ausführen, die mit dem Ausweichen vor Gegenständen oder Hindernissen, beim Befahren oder Verlassen von Parzellen, beim Beladen oder Nachfüllen von Betriebsmitteln oder bei spezifischen vorhersehbaren Vorgängen, beispielsweise in Abhängigkeit von der Art der auf der betreffenden Parzelle angebauten Pflanzen, den Eigenschaften des Bodens dieser Parzelle und/oder dem Typ des/der betroffenen Fahrzeugs/Fahrzeuge oder Gespanns.

3. Verfahren nach Anspruch 1 oder 2, **dadurch gekennzeichnet, dass** es darin bestehen, für vorhersehbare Manöver vorab Modellierungen der Fahrbahnen der verschiedenen Fahrzeuge oder Gespanne zu erstellen, die den oder die nachfolgenden Vorgänge ausführen, die auf der betreffenden Parzelle durchgeführt werden könnten, wobei ein möglicher Fehler- oder Abweichungsfaktor berücksichtigt wird, der durch Messungen unter realen Einsatzbedingungen ermittelt wurde.

4. Verfahren nach einem der Ansprüche 1 bis 3, **dadurch gekennzeichnet, dass** der virtuelle Plan der Parzelle (1) auch eine Aufteilung ihrer Fläche in Arbeitsbereiche in Verbindung mit Aussaatempfehlungen umfasst, wie z. B. die Anpassung der auszubringenden Aussaatmenge und/oder Düngemittelmenge, die Arbeitsgeschwindigkeit, die Arbeitstiefe, die spezifische Einstellung mindestens eines Betriebsparameters des Säfahrzeugs oder Gespannes (2) oder ähnlichem.

5. Verfahren nach einem der Ansprüche 1 bis 4, **dadurch gekennzeichnet, dass** die kontrollierte Aussaat der Parzelle (1) durch ein autonom oder ferngesteuert arbeitendes Roboterfahrzeug (2) erfolgt, dessen Arbeitsbreite (L) vorteilhafterweise ein ganzzahliges Untervielfach der Arbeitsbreiten der verschiedenen Fahrzeuge oder Gespanne ist, die den oder die nachfolgenden Arbeitsgänge ausführen, die auf der betreffenden Parzelle (1) durchgeführt werden können, wobei letztere vorzugsweise ebenfalls vom Typ einer robotisierten Maschine sind, die autonom oder ferngesteuert arbeitet.

6. System zur Durchführung des Verfahren zur kontrollierten Aussaat gemäß einem der Ansprüche 1 bis 5, das ein Säfahrzeug oder Gespann mit Sämaschine (2) umfasst, autonom oder halbautonom, mit einer Vielzahl einzelner Säorgane (3), die jeweils dazu geeignet und bestimmt sind, eine Säreihe (4) zu bilden, wobei dieses Fahrzeug oder Gespann (2) so konfiguriert ist, dass es selektiv und zumindest vorübergehend eine, mehrere oder alle Säreihen (4) durch Blockieren und gegebenenfalls Einziehen des oder der betreffenden Elemente unterbrechen kann,
System **dadurch gekennzeichnet, dass** das Fahrzeug oder Gespann (2) mit Steuerungsmitteln ausgestattet ist, die eine Computereinrichtung umfassen, die so konfiguriert ist, dass sie einen virtuellen Plan der zu besäenden Parzelle (1) auswertet und ein Bewegungs- und Betriebsprotokoll für das Fahrzeug oder Gespann (2) erstellt und ausführt , das so konfiguriert ist, dass es eine kontrollierte Aussaat mit selektiver Markierung auf der gesamten betreffenden Parzelle (1) durchführt, entsprechend den Fahrbahnen der Laufwerke des oder der Fahrzeuge oder Gespanne, die den oder die Vorgänge nach der Aussaat dieser Parzelle durchführen.

7. System nach Anspruch 6, **dadurch gekennzeichnet, dass** das Säfahrzeug oder Sägespann (2) ein robotisiertes Fahrzeug ist, das autonom, halbautonom oder ferngesteuert betrieben wird.

## Claims

1. Method for the controlled seeding of a plot (1) of agricultural land by way of a seeding vehicle or a machine combination with a seeder (2), having a plurality of single seeding elements (3) each able and intended to produce a seeding row (4), this vehicle or machine combination (2) being configured so as to be able to selectively, and at least temporarily, interrupt one, several or all the seeding row(s) (4), by blocking and/or retracting the element(s) (3) concerned, in order to tramline said plot (1) while avoiding crushing the crops during the planned passage(s) of one or more known vehicle(s) or machine combination(s) intended to carry out one or more subsequent operation(s) on this plot (1),
said method consisting in providing, in advance, a virtual plan of the plot with the current, generally straight, portions (4') of the arrangements of seeding rows to be produced, at least in a main interior region (5) of said plot (1) and possibly in a peripheral headland region (6) bordering or surrounding, where applicable at least partially, this interior region (5), in inferring therefrom the trajectories of the seeding vehicle or machine combination (2) and in controlling the latter to carry out controlled seeding with tramlining for these current portions (4'), depending on the trajectories of the travel elements of the vehicle(s) or machine combination(s) carrying out the subsequent operation(s) on these current portions,
method **characterised in that** it also consists in providing and in taking into account the specific trajectories (7, 8) of the vehicle(s) or machine combination(s) carrying out the subsequent above-mentioned operation(s) at least during cornering, during U-turns or between the current portions, and in controlling the seeding vehicle or machine combination (2) to carry out controlled seeding with tramlining also during these specific trajectories (7, 8).

2. Method according to claim 1, **characterised in that** it further consists in determining and taking into account the specific trajectories (8) of the vehicle(s) or machine combination(s) carrying out the above-mentioned subsequent operation(s) during manoeuvres associated with avoiding objects or obstacles, with entering or leaving the plot, with operations to load or supply inputs or with specific foreseeable operations, depending for example on the type of plant cultivated on the plot considered, the characteristics of its soil and/or the type of vehicle or machine combination concerned.

3. Method according to claim 1 or 2, **characterised in that** it consists in providing in advance, for the foreseeable manoeuvres, models of the trajectories of the travel means of the various vehicles or machine combinations carrying out the subsequent operation(s) likely to be implemented on the plot considered, taking into account a possible error or shift factor determined by measurements during implementations under real conditions.

4. Method according to any one of claims 1 to 3, **characterised in that** the virtual plan of the plot (1) also comprises a division of its surface into work areas in relation with seeding recommendations, such as modulation of the dose of seed and/or fertiliser to be deposited, working speed, working depth, adjustment specific to at least one operating parameter of the seeding vehicle or machine combination (2) or similar.

5. Method according to any one of claims 1 to 4, **characterised in that** the controlled seeding of the plot (1) is carried out by a robotic vehicle (2), operating autonomously or controlled remotely, having a working width (L) that is advantageously an integer submultiple of the working widths of the various vehicles or machine combinations carrying out the subsequent operation(s) likely to be implemented on the plot (1) considered, the latter also advantageously being of the robotic machine type, operating autonomously or controlled remotely.

6. System for the implementation of the method for the controlled seeding according to any one of claims 1 to 5, comprising a seeding vehicle or a machine combination with a seeder (2), that is autonomous or semi-autonomous, having a plurality of single seeding elements (3), each able and intended to produce a seeding row (4), this vehicle or machine combination (2) being configured so as to be able to selectively, and at least temporarily, interrupt one, several or all the seeding row(s) (4), by blocking and possibly retracting the element(s) concerned,
system **characterised in that** the vehicle or machine combination (2) is equipped with control means comprising a computer means configured to use a virtual plan of the plot (1) to be sown and to define and execute a protocol for the travel and operation of said vehicle or machine combination (2) configured to carry out controlled seeding with selective tramlining over the entire plot (1) considered, according to the trajectories of the travel elements of the vehicle(s) or machine combination(s) carrying out the operation(s) subsequent to the seeding of this plot.

7. System according to claim 6, **characterised in that** the seeding vehicle or machine combination (2) is of the robotic vehicle type, operating autonomously, semi-autonomously or controlled remotely
